# EUROPÄISCHE PATENTANMELDUNG

(11) **EP 3 693 194 A1**
(43) Veröffentlichungstag der Anmeldung: **12.08.2020**
(21) Anmeldenummer: 20155206.4
(22) Anmeldetag: 03.02.2020
(51) Int. Cl.: B60C 23/00

(54) **VERFAHREN ZUR ANPASSUNG EINES REIFENFÜLLDRUCKS EINES LANDWIRTSCHAFTLICHEN FAHRZEUGS**

(30) Priorität: 11.02.2019 DE 102019201743
(71) Anmelder: Deere & Company, Moline, IL 61265 (US)
(72) Erfinder: Schott, Florian, 68163 Mannheim (DE); Baum, Bernd, 68163 Mannheim (DE)
(74) Vertreter: Dehnhardt, Florian Christopher

(57) **Zusammenfassung**

Verfahren zur Anpassung eines Reifenfülldrucks eines landwirtschaftlichen Fahrzeugs (12), bei dem mittels eines Navigationssystems (20) eine aktuelle Fahrzeugposition ermittelt und von einer Kontrolleinheit (18) mit einer kartografisch erfassten Feldumgrenzung abgeglichen wird, wobei von der Kontrolleinheit (18) bei Erkennung eines fahrtbedingten Eintritts in einen von der Feldumgrenzung umschlossenen Bearbeitungsbereich aus einer Datenbank (26) ein zur Feldbearbeitung vorgesehener Soll-Reifenfülldruck ausgewählt wird, wobei der ausgewählte Soll-Reifenfülldruck auf Veranlassung der Kontrolleinheit (18) mittels einer Reifendruckregelanlage (34) in wenigstens einen Reifen (36, 38, 40, 42) des landwirtschaftlichen Fahrzeugs (12) eingesteuert wird.

## Beschreibung

Die Erfindung bezieht sich auf ein Verfahren zur Anpassung eines Reifenfülldrucks eines landwirtschaftlichen Fahrzeugs.

Derartige Verfahren finden in landwirtschaftlichen Fahrzeugen zur Bodenschonung zunehmend Verbreitung. Die eigentliche Anpassung des Reifenfülldrucks erfolgt dabei mittels einer in dem landwirtschaftlichen Fahrzeug angeordneten Reifendruckregelanlage. Diese besteht üblicherweise aus einem Kompressor bzw. einem daraus gespeisten Druckluftspeicher, wobei eine dem Kompressor bzw. Druckluftspeicher nachgeschaltete Ventileinrichtung die Einsteuerung eines gewünschten Reifenfülldrucks in einen oder mehrere Reifen des landwirtschaftlichen Fahrzeugs erlaubt.

Es ist Aufgabe der vorliegenden Erfindung, ein Verfahren der eingangs genannten Art hinsichtlich der Bedürfnisse moderner landwirtschaftlicher Anwender anzupassen.

Diese Möglichkeit wird durch ein Verfahren mit den Merkmalen des Patentanspruchs 1 geschaffen.

Das erfindungsgemäße Verfahren zur Anpassung eines Reifenfülldrucks eines landwirtschaftlichen Fahrzeugs sieht vor, dass mittels eines Navigationssystems eine aktuelle Fahrzeugposition ermittelt und von einer Kontrolleinheit mit einer kartografisch erfassten Feldumgrenzung abgeglichen wird. Hierbei wird von der Kontrolleinheit bei Erkennung eines fahrtbedingten Eintritts in einen von der Feldumgrenzung umschlossenen Bearbeitungsbereich aus einer Datenbank ein zur Feldbearbeitung vorgesehener Soll-Reifenfülldruck ausgewählt, wobei der ausgewählte Soll-Reifenfülldruck auf Veranlassung der Kontrolleinheit mittels einer Reifendruckregelanlage in wenigstens einen Reifen des landwirtschaftlichen Fahrzeugs eingesteuert wird. Zur Verringerung der Bodenverdichtung erfolgt dies insbesondere im Anschluss an eine Transportfahrt durch teilweises Ablassen der in dem wenigstens einen Reifen befindlichen Luft.

Das Passieren der Feldumgrenzung bildet somit den Trigger für eine entsprechende Anpassung des Reifenfülldrucks ausgehend von einem für eine vorhergehende Transportfahrt vorgesehenen Niveau. Das beanspruchte Vorgehen trägt dabei der bei modernen landwirtschaftlichen Anwendern üblichen computergestützten Arbeitsvorbereitung Rechnung, da die kartografische Planung der Bearbeitungsbereiche wie auch die Zuordnung geeigneter Werte für den Soll-Reifenfülldruck vorab auf Grundlage umfassender agronomischer Informationen erfolgen kann. Die solchermaßen vorgenommenen Voreinstellungen bzw. Vorgaben können anschließend in die Datenbank hochgeladen werden, sodass diese während der Durchführung des eigentlichen Bearbeitungsvorgangs auf dem landwirtschaftlichen Fahrzeug unmittelbar zur Verfügung stehen.

Bei dem landwirtschaftlichen Fahrzeug kann es sich beispielsweise um einem landwirtschaftlichen Traktor, eine Erntemaschine, einen Feldhäcksler, eine selbstfahrende Feldspritze oder dergleichen handeln.

Vorteilhafte Weiterbildungen des erfindungsgemäßen Verfahrens gehen aus den Unteransprüchen hervor.

Im einfachsten Fall ist der zur Feldbearbeitung und/oder zur Durchführung der Transportfahrt vorgesehene Soll-Reifenfülldruck fest vorgegeben. Die Vorgabe kann manuell im Rahmen der bereits erwähnten Arbeitsvorbereitung erfolgen und auf entsprechenden Erfahrungen bzw. agronomischen Informationen des Anwenders beruhen. Andererseits können auch werksseitig vorgegebene Werte für den Soll-Reifenfülldruck in der Datenbank hinterlegt sein. Die Werte sind in diesem Fall derart gewählt, dass diese allgemein üblichen Transport- bzw. Bearbeitungssituationen gerecht werden.

Die feste Vorgabe des Soll-Reifenfülldrucks stellt letztlich einen die Datenverarbeitung vereinfachenden Kompromiss dar. Werden erhöhte Anforderungen hinsichtlich einer situationsgerechten Anpassung des Reifenfülldrucks gestellt, kann auch vorgesehen sein, dass der zur Feldbearbeitung und/oder zur Durchführung der Transportfahrt vorgesehene Soll-Reifenfülldruck hinsichtlich äußerer Einflussgrößen, insbesondere einer tatsächlichen bzw. aktuellen Achslastverteilung des landwirtschaftlichen Fahrzeugs, einer Fahrbahnbeschaffenheit, einer Außentemperatur, von Wetterverhältnissen, einer Bodenbeschaffenheit, einer Topografie, von beabsichtigten Bodenbearbeitungsmaßnahmen, des Typs eines angebrachten Anbau- oder Bearbeitungsgeräts, und/oder eines Reifentyps modifiziert wird. Die hierfür erforderliche Datenerhebung kann insbesondere im Rahmen eines selbstlernenden Prozesses erfolgen, wie er in der DE 10 2016 203 689 A1 dargestellt ist.

Ferner besteht die Möglichkeit, dass von der Kontrolleinheit zur Auswahl des einzusteuernden Soll-Reifenfülldrucks aus der Datenbank drahtlos auf einen zentralen Datenserver zugegriffen wird. Vorzugsweise erfolgt in einem solchen Fall nicht nur die Hinterlegung der für den Soll-Reifenfülldruck vorgegebenen Werte außerhalb des landwirtschaftlichen Fahrzeugs, sondern auch deren Vorgabe bzw. hinsichtlich äußerer Einflussgrößen vorgenommene Modifikation. Im Ergebnis führt dies zu einer Verringerung der seitens des landwirtschaftlichen Fahrzeugs im Rahmen seiner Steuergerätearchitektur vorzuhaltenden Rechen- und Speicherkapazitäten.

Um die Durchführung unnötiger Druckregelvorgänge zu vermeiden, ist es denkbar, dass für den Fall, dass erste und zweite Feldumgrenzungen einander überlappende Bearbeitungsbereiche bilden, der eingesteuerte Reifenfülldruck von der Kontrolleinheit beibehalten wird, sofern anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug die Feldumgrenzungen passiert, ohne die einander überlappenden Bearbeitungsbereiche voraussichtlich zu verlassen. Eine Extrapolation der vorausliegenden Fahrttrajektorie ist vergleichsweise zuverlässig möglich, da davon auszugehen ist, dass das landwirtschaftliche Fahrzeug beim Wechsel von dem einen in den anderen Bearbeitungsbereich keine plötzlichen bzw. unvorhersehbaren Richtungswechsel vollführen wird.

Dementsprechend kann auch vorgesehen sein, dass für den Fall, dass erste und zweite Feldumgrenzungen voneinander beabstandete Bearbeitungsbereiche bilden, der eingesteuerte Reifenfülldruck von der Kontrolleinheit beibehalten wird, sofern anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug die erste Feldumgrenzung in Richtung der zweiten Feldumgrenzung fahrend verlässt und die hierfür erforderliche Fahrtzeit kleiner oder gleich einer gegebenen Befüllzeit des wenigstens einen Reifens ist. Letztere ist für die verwendete Reifendruckregelanlage sowie den betreffenden Reifentyp spezifisch und kann als entsprechende Konstante in der Datenbank bzw. der Kontrolleinheit hinterlegt sein. Die erforderliche Fahrtzeit hingegen kann von der Kontrolleinheit aus der zwischen den beiden Feldumgrenzungen entlang der vorausliegenden Fahrttrajektorie zurückzulegenden Fahrstrecke sowie dem insofern zu erwartenden Fahrtgeschwindigkeitsverlauf abgeschätzt werden.

Umgekehrt besteht die Möglichkeit, dass für den Fall, dass anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug den Bearbeitungsbereich in Richtung eines Transportwegs fahrend verlässt, aus der Datenbank ein für die Durchführung einer Transportfahrt vorgesehener Soll-Reifenfülldruck ausgewählt und zum Zwecke des (Wieder-) Befüllens in den wenigstens einen Reifen eingesteuert wird. Der vorausliegende Transportweg kann dabei hinsichtlich der Verwendung eines geeigneten Reifenfülldrucks kategorisiert sein. So kann insbesondere zwischen einer Transportfahrt auf einer befestigten Asphaltstraße und einem unbefestigten Feldweg unterschieden werden. Lage und Verlauf des vorausliegenden Transportwegs können dabei ebenfalls kartografisch erfasst und in der Datenbank zum Zwecke des Abgleichs mit der aktuellen Fahrzeugposition hinterlegt sein.

Um unnötige Bodenschäden auszuschließen oder Zeitverluste aufgrund vorab auszuführender Druckregelvorgänge bei Erreichen des Bearbeitungsbereichs zu vermeiden, ist es denkbar, dass der Soll-Reifenfülldruck von der Kontrolleinheit bei Erkennung eines zu erwartenden fahrtbedingten Eintritts in einen von der Feldumgrenzung umschlossenen Bearbeitungsbereich vorausschauend nach Maßgabe einer durch die Reifendruckregelanlage gegebenen Ablasszeit eingesteuert wird. Letztere ist für die verwendete Reifendruckregelanlage spezifisch und kann als entsprechende Konstante in der Datenbank hinterlegt sein.

Zur Verbesserung des Bedienerkomforts kann der ausgewählte Soll-Reifenfülldruck von der Kontrolleinheit automatisiert, insbesondere nach vorheriger Freigabe durch einen Anwender bzw. Fahrer eingesteuert werden. In letzterem Fall ist sichergestellt, dass der Druckregelvorgang für den Anwender bzw. Fahrer nicht überraschend erfolgt.

Entsprechend heutiger Nutzergewohnheiten ist es zudem möglich, dass die Freigabe mittels eines über eine WLAN- bzw. WiFi-Verbindung mit der Kontrolleinheit kommunizierenden mobilen Endgeräts erfolgt. Bei dem mobilen Endgerät handelt es sich typischerweise um ein Smartphone oder ein Tablet. Dieses kann beispielsweise in einer Fahrerkabine des landwirtschaftlichen Fahrzeugs mittels eines lösbaren Halters angebracht sein.

Das erfindungsgemäße Verfahren wird im Folgenden anhand der beigefügten Zeichnungen näher erläutert. Es zeigen:
- Fig. 1: ein Ausführungsbeispiel des erfindungsgemäßen Verfahrens zur Anpassung eines Reifenfülldrucks eines landwirtschaftlichen Fahrzeugs,
- Fig. 2: ein zur Ausführung des erfindungsgemäßen Verfahrens vorgesehenes vernetztes System mit einem landwirtschaftlichen Fahrzeug,
- Fig. 3: eine erste Arbeitssituation, in der das landwirtschaftliche Fahrzeug im Anschluss an eine Transportfahrt in einen ersten Bearbeitungsbereich eintritt,
- Fig. 4: eine zweite Arbeitssituation mit einander überlappenden ersten und zweiten Bearbeitungsbereichen,
- Fig. 5: eine dritte Arbeitssituation mit voneinander beabstandeten ersten und zweiten Bearbeitungsbereichen, und
- Fig. 6: eine vierte Arbeitssituation, in der das landwirtschaftliche Fahrzeug den ersten Bearbeitungsbereich unter Aufnahme einer nachfolgenden Transportfahrt verlässt.

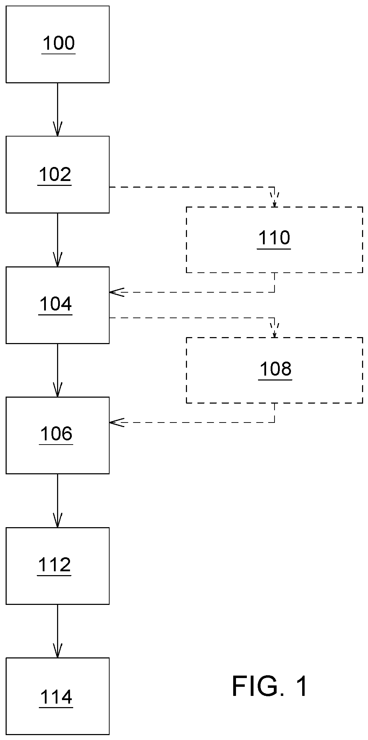

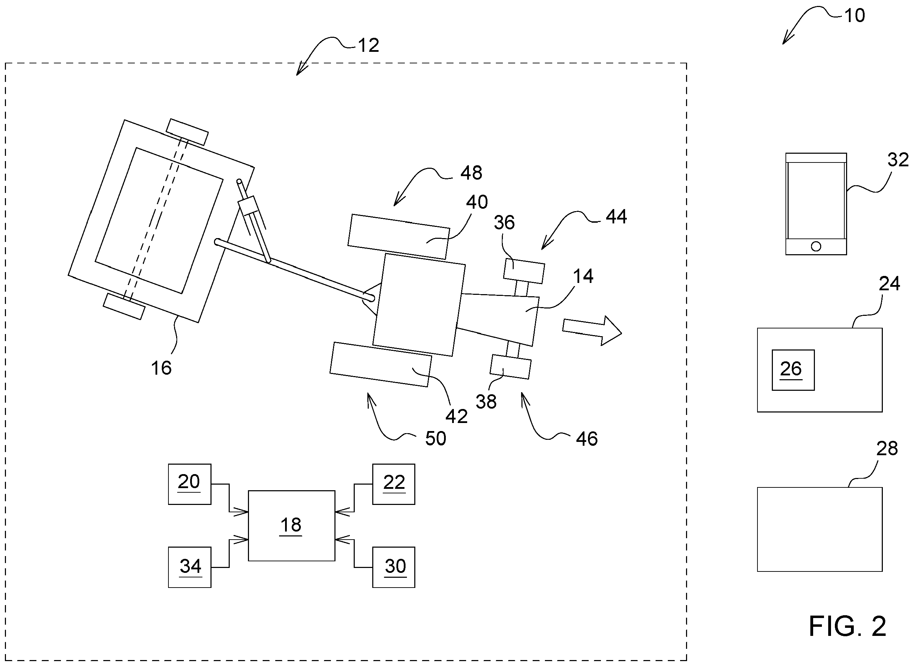

Fig. 1 zeigt ein schematisch dargestelltes Ausführungsbeispiel des erfindungsgemäßen Verfahrens zur Anpassung eines Reifenfülldrucks eines landwirtschaftlichen Fahrzeugs. Dieses soll nachfolgend unter Bezugnahme auf das in Fig. 2 dargestellte vernetzte System beschrieben werden.

Gemäß Fig. 2 umfasst das vernetzte System 10 neben einem landwirtschaftlichen Fahrzeug 12, bei dem es sich beispielsweise um einen landwirtschaftlichen Traktor 14 mit einem daran angebrachten Anbau- bzw. Bearbeitungsgerät 16 handelt, eine fahrzeugfeste Kontrolleinheit 18, die mit einem satellitengestützten Navigationssystem 20 zur Ermittlung einer aktuellen Fahrzeugposition sowie über eine Mobilfunkschnittstelle 22 drahtlos mit einer von einem zentralen Datenserver 24 umfassten Datenbank 26 bzw. einem externen Datenanbieter 28 kommuniziert. Daneben ist über eine weitere Datenschnittstelle 30 eine WLAN- bzw. WiFi-Verbindung beispielsweise mit einem mobilen Endgerät 32 in Gestalt eines Smartphones oder eines Tablets herstellbar, das in einer Fahrerkabine des landwirtschaftlichen Fahrzeugs 12 mittels eines lösbaren Halters angebracht ist.

Eine nicht näher dargestellte Reifendruckregelanlage 34 erlaubt es, in einen oder mehrere Reifen 36, 38, 40, 42 des landwirtschaftlichen Fahrzeugs 12 einen gewünschten Reifenfülldruck einzusteuern. Die Einsteuerung erfolgt achsweise oder radindividuell an zugehörigen Vorderrädern 44, 46 bzw. Hinterrädern 48, 50 des landwirtschaftlichen Fahrzeugs 12.

Das in der prozessorgesteuerten Kontrolleinheit 18 ablaufende Verfahren wird gemäß Fig. 1 in einem Startschritt 100 bei Inbetriebnahme des landwirtschaftlichen Fahrzeugs 12 initialisiert. Daraufhin wird in einem ersten Hauptschritt 102 mittels des Navigationssystems 20 die aktuelle Fahrzeugposition ermittelt und von der Kontrolleinheit 18 mit in der Datenbank 26 hinterlegten kartografisch erfassten Feldumgrenzungen abgeglichen.

Je nach Arbeitssituation, in der sich das landwirtschaftliche Fahrzeug 12 befindet, ist das weitere Vorgehen nun unterschiedlich.

### Erste Arbeitssituation

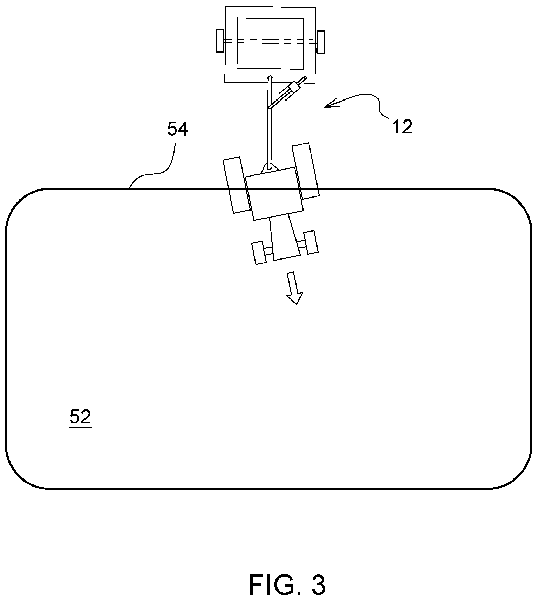

Fig. 3 zeigt eine erste Arbeitssituation, in der das landwirtschaftliche Fahrzeug 12 im Anschluss an eine Transportfahrt in einen ersten Bearbeitungsbereich 52 in Gestalt eines zu bearbeitenden Felds eintritt.

Wie zu erkennen ist, ist der erste Bearbeitungsbereich 52 vorliegend von einer zugehörigen ersten Feldumgrenzung 54 umschlossen bzw. durch diese definiert. Erkennt die Kontrolleinheit 18 daher im ersten Hauptschritt 102, dass das landwirtschaftliche Fahrzeug 12 fahrtbedingt durch Passieren der ersten Feldumgrenzung 54 ausgehend von einer Transportfahrt in den ersten Bearbeitungsbereich 52 eintritt, so wird in einem nachfolgenden zweiten Hauptschritt 104 von der Kontrolleinheit 18 aus der Datenbank 26 ein zur Feldbearbeitung vorgesehener Soll-Reifenfülldruck ausgewählt.

Der ausgewählte Soll-Reifenfülldruck wird anschließend in einem dritten Hauptschritt 106 auf Veranlassung der Kontrolleinheit 18 mittels der Reifendruckregelanlage 34 in wenigstens einen Reifen 36, 38, 40, 42 des landwirtschaftlichen Fahrzeugs 12 automatisiert eingesteuert. Zur Verringerung der Bodenverdichtung erfolgt dies durch teilweises Ablassen der in dem wenigstens einen Reifen 36, 38, 40, 42 befindlichen Luft.

Optional wird der ausgewählte Soll-Reifenfülldruck von der Kontrolleinheit 18 im dritten Hauptschritt 106 erst nach vorheriger Freigabe durch einen Anwender bzw. Fahrer eingesteuert. Die Freigabe erfolgt in einem Zwischenschritt 108 mittels des über die WLAN- bzw. WiFi-Verbindung kommunizierenden mobilen Endgeräts 32.

Das Passieren der Feldumgrenzung 54 bildet somit den Trigger für eine entsprechende Anpassung des Reifenfülldrucks ausgehend von einem für die vorhergehende Transportfahrt vorgesehenen Niveau.

Im einfachsten Fall ist der zur Feldbearbeitung bzw. Durchführung der Transportfahrt vorgesehene Soll-Reifenfülldruck fest vorgegeben. Die Vorgabe erfolgt manuell und beruht auf entsprechenden Erfahrungen bzw. agronomischen Informationen des Anwenders. Alternativ sind werksseitig vorgegebene Werte für den Soll-Reifenfülldruck in der Datenbank 26 hinterlegt. Die Werte sind in diesem Fall derart vorgegeben, dass diese allgemein üblichen Transport- bzw. Bearbeitungssituationen gerecht werden.

Die feste Vorgabe des Soll-Reifenfülldrucks stellt letztlich einen die Datenverarbeitung vereinfachenden Kompromiss dar. Werden erhöhte Anforderungen hinsichtlich einer situationsgerechten Anpassung des Reifenfülldrucks gestellt, so ist optional vorgesehen, dass in einem dem zweiten Hauptschritt 104 vorgelagerten weiteren Zwischenschritt 110 der zur Feldbearbeitung und/oder zur Durchführung der Transportfahrt vorgesehene Soll-Reifenfülldruck hinsichtlich äußerer Einflussgrößen, insbesondere einer tatsächlichen bzw. aktuellen Achslastverteilung des landwirtschaftlichen Fahrzeugs 12, einer Fahrbahnbeschaffenheit, einer Außentemperatur, von Wetterverhältnissen, einer Bodenbeschaffenheit, einer Topografie, von beabsichtigten Bodenbearbeitungsmaßnahmen, des Typs des angebrachten Anbau- oder Bearbeitungsgeräts 16, und/oder eines Reifentyps modifiziert wird. Die hierfür erforderliche Datenerhebung erfolgt insbesondere im Rahmen eines selbstlernenden Prozesses, wie er in der DE 10 2016 203 689 A1 dargestellt ist. Die Modifikation erfolgt entweder seitens der Kontrolleinheit 18 oder aber des externen Datenanbieters 28, von wo die modifizierten Werte jeweils in die Datenbank 26 des zentralen Datenservers 24 hochgeladen werden.

Um unnötige Bodenschäden auszuschließen oder Zeitverluste aufgrund vorab auszuführender Druckregelvorgänge bei Erreichen des Bearbeitungsbereichs 52 zu vermeiden, wird optional im dritten Hauptschritt 106 der Soll-Reifenfülldruck von der Kontrolleinheit 18 bei Erkennung eines zu erwartenden fahrtbedingten Eintritts in den von der Feldumgrenzung 54 umschlossenen Bearbeitungsbereich 52 vorausschauend nach Maßgabe einer durch die Reifendruckregelanlage 34 gegebenen Ablasszeit eingesteuert. Letztere ist für die verwendete Reifendruckregelanlage 34 spezifisch und ist als entsprechende Konstante in der Datenbank 26 hinterlegt.

### Zweite Arbeitssituation

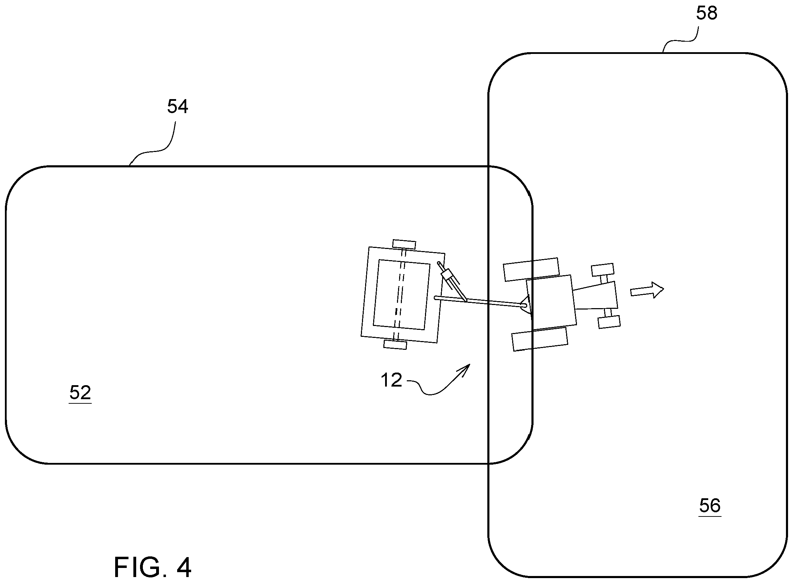

Fig. 4 zeigt eine zweite Arbeitssituation mit einander überlappenden ersten und zweiten Bearbeitungsbereichen 52, 56 in Gestalt hintereinander zu bearbeitender Felder, wobei diese von ersten und zweiten Feldumgrenzungen 54, 58 umschlossen sind.

Um die Durchführung unnötiger Druckregelvorgänge zu vermeiden, wird der eingesteuerte Reifenfülldruck von der Kontrolleinheit 18 unter derartigen Bedingungen in einem vierten Hauptschritt 112 dann beibehalten, sofern anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug 12 die Feldumgrenzungen 54, 58 passiert, ohne die einander überlappenden Bearbeitungsbereiche 52, 56 voraussichtlich zu verlassen. Eine Extrapolation der vorausliegenden Fahrttrajektorie ist vergleichsweise zuverlässig möglich, da davon auszugehen ist, dass das landwirtschaftliche Fahrzeug 12 beim Wechsel von dem einen in den anderen Bearbeitungsbereich 52, 56 keine plötzlichen bzw. unvorhersehbaren Richtungswechsel vollführen wird.

### Dritte Arbeitssituation

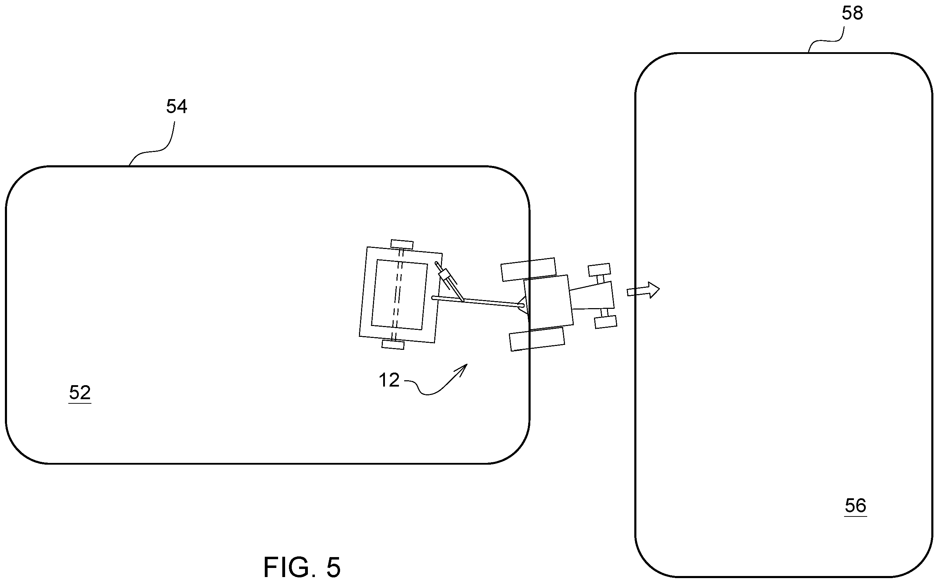

Fig. 5 zeigt eine dritte Arbeitssituation mit voneinander beabstandeten ersten und zweiten Bearbeitungsbereichen 52, 56 in Gestalt hintereinander zu bearbeitender Felder, wobei diese von ersten und zweiten Feldumgrenzungen 54, 58 umschlossen sind.

In einem solchen Fall wird von der Kontrolleinheit 18 im vierten Hauptschritt 112 der eingesteuerte Reifenfülldruck beibehalten, sofern anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug 12 die erste Feldumgrenzung 54 in Richtung der zweiten Feldumgrenzung 58 fahrend verlässt und die hierfür erforderliche Fahrtzeit kleiner oder gleich einer gegebenen Befüllzeit des wenigstens einen Reifens 36, 38, 40, 42 ist. Letztere ist für die verwendete Reifendruckregelanlage 34 sowie den betreffenden Reifentyp spezifisch und als entsprechende Konstante in der Datenbank 26 bzw. der Kontrolleinheit 18 hinterlegt. Die erforderliche Fahrtzeit hingegen wird von der Kontrolleinheit 18 aus der zwischen den beiden Feldumgrenzungen 54, 58 entlang der vorausliegenden Fahrttrajektorie zurückzulegenden Fahrstrecke sowie dem insofern zu erwartenden Fahrtgeschwindigkeitsverlauf abgeschätzt.

### Vierte Arbeitssituation

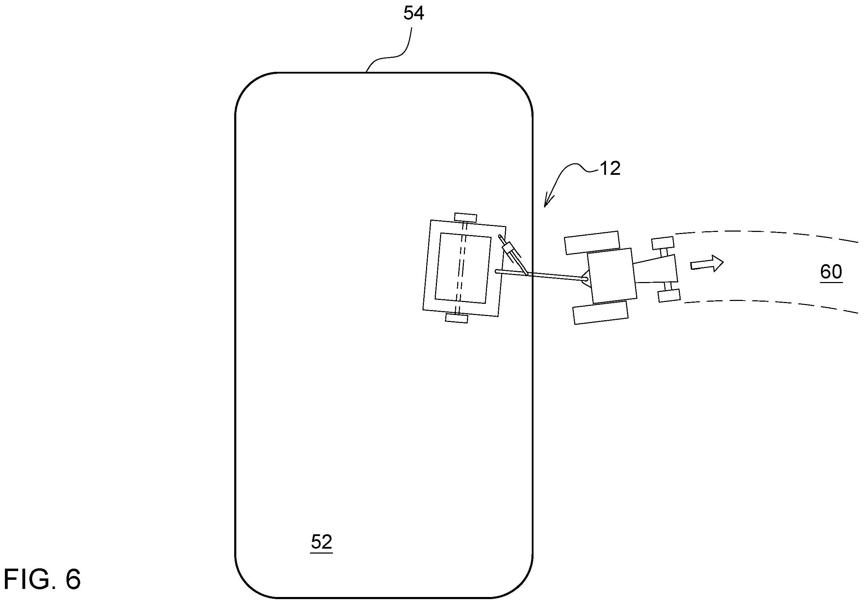

Fig. 6 zeigt eine vierte Arbeitssituation, in der das landwirtschaftliche Fahrzeug 12 den ersten Bearbeitungsbereich 52 unter Aufnahme einer nachfolgenden Transportfahrt verlässt.

Für einen derartigen Fall, in dem anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug 12 den Bearbeitungsbereich 52 in Richtung eines Transportwegs 60 fahrend verlässt, wird von der Kontrolleinheit 18 aus der Datenbank 26 ein für die Durchführung einer Transportfahrt vorgesehener Soll-Reifenfülldruck ausgewählt und zum Zwecke des (Wieder-) Befüllens des wenigstens einen Reifens 36, 38, 40, 42 eingesteuert.

Der vorausliegende Transportweg 60 ist dabei hinsichtlich der Verwendung eines geeigneten Reifenfülldrucks kategorisiert. So wird insbesondere zwischen einer Transportfahrt auf einer befestigten Asphaltstraße und einem unbefestigten Feldweg unterschieden. Lage und Verlauf des vorausliegenden Transportwegs 60 sind dabei ebenfalls kartografisch erfasst und in der Datenbank 26 zum Zwecke des Abgleichs mit der aktuellen Fahrzeugposition hinterlegt.

In einem auf den vierten Hauptschritt 112 folgenden Schlussschritt 114 wird das Verfahren beendet, um von vorne zu beginnen.

Die vorstehende Beschreibung bezieht sich vereinfachend auf eine Einsteuerung ein und desselben Reifenfülldrucks an sämtlichen Reifen 36, 38, 40, 42 des landwirtschaftlichen Fahrzeugs 12. Tatsächlich kann der einzusteuernde Reifenfülldruck auch achsweise oder radindividuell unterschiedlich sein, wobei sich eine derartige Notwendigkeit insbesondere aufgrund einer an Vorder- und Hinterrädern 44, 46, 48, 50 unterschiedlichen Bereifung oder einer Querneigung des zu bearbeitenden bzw. zu befahrenden Geländes ergeben kann.

Zudem kann es sich bei dem landwirtschaftlichen Fahrzeug 12 anstelle eines landwirtschaftlichen Traktors 14 ebenso gut auch um eine Erntemaschine, einen Feldhäcksler, eine selbstfahrende Feldspritze oder dergleichen handeln.

## Patentansprüche

1. Verfahren zur Anpassung eines Reifenfülldrucks eines landwirtschaftlichen Fahrzeugs, bei dem mittels eines Navigationssystems (20) eine aktuelle Fahrzeugposition ermittelt und von einer Kontrolleinheit (18) mit einer kartografisch erfassten Feldumgrenzung (54, 58) abgeglichen wird, wobei von der Kontrolleinheit (18) bei Erkennung eines fahrtbedingten Eintritts in einen von der Feldumgrenzung (54, 58) umschlossenen Bearbeitungsbereich (52, 56) aus einer Datenbank (26) ein zur Feldbearbeitung vorgesehener Soll-Reifenfülldruck ausgewählt wird, wobei der ausgewählte Soll-Reifenfülldruck auf Veranlassung der Kontrolleinheit (18) mittels einer Reifendruckregelanlage (34) in wenigstens einen Reifen (36, 38, 40, 42) des landwirtschaftlichen Fahrzeugs (12) eingesteuert wird.

2. Verfahren nach Anspruch 1, **dadurch gekennzeichnet, dass** ein zur Feldbearbeitung und/oder zur Durchführung einer Transportfahrt vorgesehener Soll-Reifenfülldruck fest vorgegeben ist.

3. Verfahren nach Anspruch 1 oder 2, **dadurch gekennzeichnet, dass** ein zur Feldbearbeitung und/oder zur Durchführung einer Transportfahrt vorgesehener Soll-Reifenfülldruck hinsichtlich äußerer Einflussgrößen modifiziert wird.

4. Verfahren nach wenigstens einem der Ansprüche 1 bis 3, **dadurch gekennzeichnet, dass** von der Kontrolleinheit (18) zur Auswahl des einzusteuernden Soll-Reifenfülldrucks aus der Datenbank (26) drahtlos auf einen zentralen Datenserver (24) zugegriffen wird.

5. Verfahren nach wenigstens einem der Ansprüche 1 bis 4, **dadurch gekennzeichnet, dass** für den Fall, dass erste und zweite Feldumgrenzungen (54, 58) einander überlappende Bearbeitungsbereiche (52, 56) bilden, der eingesteuerte Reifenfülldruck von der Kontrolleinheit (18) beibehalten wird, sofern anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug (12) die Feldumgrenzungen (54, 58) passiert, ohne die einander überlappenden Bearbeitungsbereiche (52, 56) voraussichtlich zu verlassen.

6. Verfahren nach wenigstens einem der Ansprüche 1 bis 5, **dadurch gekennzeichnet, dass** für den Fall, dass erste und zweite Feldumgrenzungen (54, 58) voneinander beabstandete Bearbeitungsbereiche (52, 56) bilden, der eingesteuerte Reifenfülldruck von der Kontrolleinheit (18) beibehalten wird, sofern anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug (12) die erste Feldumgrenzung (54) in Richtung der zweiten Feldumgrenzung (58) fahrend verlässt und die hierfür erforderliche Fahrtzeit kleiner oder gleich einer gegebenen Befüllzeit des wenigstens einen Reifens (36, 38, 40, 42) ist.

7. Verfahren nach wenigstens einem der Ansprüche 1 bis 6, **dadurch gekennzeichnet, dass** für den Fall, dass anhand der aktuellen Fahrzeugposition und/oder deren vorhergehenden Verlauf insbesondere durch Extrapolation der vorausliegenden Fahrttrajektorie erkannt wird, dass das landwirtschaftliche Fahrzeug (12) den Bearbeitungsbereich (52) in Richtung eines Transportwegs (60) fahrend verlässt, aus der Datenbank (26) ein für die Durchführung einer Transportfahrt vorgesehener Soll-Reifenfülldruck ausgewählt und zum Zwecke des Befüllens in den wenigstens einen Reifen (36, 38, 40, 42) eingesteuert wird.

8. Verfahren nach wenigstens einem der Ansprüche 1 bis 7, **dadurch gekennzeichnet, dass** der Soll-Reifenfülldruck von der Kontrolleinheit (18) bei Erkennung eines zu erwartenden fahrtbedingten Eintritts in einen von der Feldumgrenzung (54) umschlossenen Bearbeitungsbereich (52) vorausschauend nach Maßgabe einer durch die Reifendruckregelanlage (34) gegebenen Ablasszeit eingesteuert wird.

9. Verfahren nach wenigstens einem der Ansprüche 1 bis 8, **dadurch gekennzeichnet, dass** der ausgewählte Soll-Reifenfülldruck von der Kontrolleinheit (18) automatisiert, insbesondere nach vorheriger Freigabe durch einen Anwender bzw. Fahrer eingesteuert wird.

10. Verfahren nach Anspruch 9, **dadurch gekennzeichnet, dass** die Freigabe mittels eines über eine WLAN- bzw. WiFi-Verbindung mit der Kontrolleinheit (18) kommunizierenden mobilen Endgeräts (32) erfolgt.
